# FASCICULE DE BREVET EUROPEEN

(11) **EP 0 712 653 B1**
(45) Date de publication et mention de la délivrance du brevet: **19.09.2001**
(21) Numéro de dépôt: 95402463.4
(22) Date de dépôt: 03.11.1995
(51) Int. Cl.: B01D 35/31, B01D 29/15, G21F 9/04

(54) **Ensemble de filtration et procédé d'élimination d'une cartouche de filtre usée**
Filteranlage und Verfahren zur Entfernung einer verbrauchten Filterpatrone
Filtration system and process for the removal of spent filter cartridge

(30) Priorité: 15.11.1994 US 339947
(43) Date de publication de la demande: 22.05.1996
(73) Titulaire: B & W NUCLEAR TECHNOLOGIES, Lynchburg, VA 24506-0935 (US)
(72) Inventeur: Pop, Mihai Gabriel Marius, Lynchburg, VA 24502 (US); Bryan, George Howard, Concord, VA 24538 (US)
(74) Mandataire: Bouget, Lucien

(56) Documents cités:
- DE-A- 3 437 365
- FR-A- 2 463 970

## Description

La présente invention se rapporte de manière générale aux filtres et plus particulièrement, à une enceinte de filtre utilisant un filtre jetable pour enlever des matières en particules d'un écoulement aqueux, en particulier des matériaux radio-actifs entraînés par de l'eau de refroidissement, et de manière à réduire l'exposition aux matériaux radio-actifs et le volume et le poids des déchets dangereux qui sont obtenus en fin de vie du filtre.

Les réacteurs nucléaires utilisent de l'eau en circulation comme fluide de refroidissement pour le coeur radio-actif. Certaines des particules entraînées par l'eau de refroidissement sont radio-actives. Avant que l'eau soit mise en circulation dans la boucle de refroidissement, le matériau radio-actif doit être enlevé. Ceci est réalisé de manière habituelle par des éléments de filtre qui sont installés pour une période de temps déterminée pour enlever les particules de déchets. Après une période de temps, le filtre se trouve colmaté avec des particules prélevées et doit être remplacé.

Des filtres conventionnels utilisés dans ce but ont une enveloppe externe perforée cylindrique en acier inoxydable ou, dans certains cas, un noyau interne et un milieu de filtration interne installés de manière permanente. Le filtrat s'écoule à travers le milieu filtrant et les pores du noyau en acier inoxydable.

En supplément, beaucoup d'installations nucléaires aux Etats-Unis et quelques installations en Europe utilisent le dispositif "Cuno" ou des enceintes de filtre similaires prévues à l'origine pour des applications non nucléaires qui normalement utilisent des paniers ou des grappes de petites cartouches de filtration plutôt qu'une grande cartouche de filtration qui peut être nécessaire pour traiter des flux importants qui peuvent être inhérents à une application particulière. Ces paniers ou cartouches de filtration sont difficiles à manipuler à l'intérieur d'un environnement nucléaire parce qu'ils font intervenir un contact humain manuel pour jeter les cartouches usées. Ce contact bien sûr peut entraîner de plus une exposition aux radiations provenant des déchets radioactifs accumulés dans le cas de la plupart des applications dans une centrale nucléaire. Les efforts pour éviter ce problème de manutention ont consisté à développer certains adaptateurs pour permettre l'utilisation d'une seule cartouche de filtre de grandes dimensions au lieu de nombreuses petites cartouches de filtration que le système "Cuno" utilisait du fait de sa conception. Tous ces adaptateurs tels que l'adaptateur monocartouche "Cuno" et l'adaptateur Pall Will-Fit (Ⓜ) comprennent des ressorts sur la partie supérieure de la cartouche et des moyens d'assemblage d'adaptateur pour précharger le panier de filtre pour former un joint avec les parois de l'enceinte de filtre telle qu'utilisée dans la conception d'origine. Le désavantage de cette approche est que, du fait que la cartouche de filtre doit être également fermée de manière étanche à sa partie inférieure, la cartouche doit être fixée de manière étanche dans l'adaptateur. En conséquence, l'adaptateur de filtre devient une pièce consommable des fournitures qui doit être remplacée chaque fois que le filtre est remplacé. Des efforts en vue de réutiliser de tels adaptateurs ont échoué parce que de tels efforts demandent autant de manipulations pour enlever les cartouches de filtre usées de l'adaptateur que dans le cas des filtres à panier du type "Cuno" d'origine.

Dans le DE-34 37 365, on a proposé un filtre pour des eaux usées de bains ou piscines comportant un boîtier et un panier de réception d'une cartouche de filtration à l'intérieur du boîtier. La cartouche de filtration comporte, à ses extrémités, des joints d'étanchéité annulaires destinés à venir en appui sur un couvercle de fermeture du boîtier et le fond du panier, respectivement. L'étanchéité nécessaine entre l'amont et l'aval de la cartouche de filtration se fait par compression de joints entre des parties rigides du dispositif. Par suite d'impératifs de sécurité, un tel système convient mal pour un dispositif destiné à la filtration de particules radioactives.

La présente invention propose un autre système d'étancheité et concerne un ensemble de filtration pour enlever une matière en particules d'un écoulement aqueux dans une enceinte de filtre comprenant :
- un boîtier de support ayant un fond supérieur démontable, une entrée pour l'écoulement aqueux, une sortie pour l'écoulement aqueux et un joint interne entre l'entrée et la sortie ;
- un adaptateur de filtre encastrable dans le boîtier et dont la dimension est telle qu'il puisse être pratiquement entièrement logé a l'intérieur dudit boîtier et qu'il soit en contact de manière étanche avec ledit joint interne dudit boîtier, ledit adaptateur de filtre ayant un fond inférieur définissant une sortie de l'adaptateur ; et
- une cartouche de filtre encastrable dans l'adaptateur de filtre ayant des dimensions telles qu'elle soit pratiquement entièrement reçue à l'intérieur de l'adaptateur de filtre et pour pouvoir simultanément entrer en contact avec le fond supérieur de l'enceinte de filtre et entrer en contact étanche avec la sortie de l'adaptateur de filtre et ayant un milieu filtrant qui s'étend à travers un passage allant de l'entrée vers la sortie de l'extrémité de filtre quand il est logé dans le boîtier, de telle sorte que l'adaptateur de filtre puisse être installé dans ladite enceinte de filtre pour une longue période de temps et que de manière répétée pendant la longue période de temps, la cartouche de filtre puisse être installée à l'intérieur dudit adaptateur de filtre pour réaliser une jonction étanche entre la cartouche et l'adaptateur de filtre et entre l'adaptateur de filtre et l'enceinte de filtre, que le flux aqueux puisse être dirigé à travers le milieu de filtration et que la cartouche puisse être enlevée et éliminée facilement.

Selon l'invention, le fond inférieur de l'adaptateur comporte une tuyère inversée en saillie vers l'intérieur de l'adaptateur constituant la sortie de l'adaptateur, la cartouche de filtre comporte un joint de sortie annulaire destiné à être engagé sur la tuyère inversée de l'adaptateur de manière étanche et un moyen de rappel élastique est intercalé entre la cartouche de filtre et l'adaptateur de filtre, de manière à exercer une force de rappel sur la cartouche en direction du fond supérieur de l'enceinte de filtre et une force de rappel sur l'adaptateur de filtre en direction du joint d'étanchéité, lorsque le fond supérieur de l'enceinte de filtre est fixé sur le boîtier.

De la sorte, l'étanchéité est garantie sans risque d'écrasement du joint même en cas de légères variations du positionnement de la cartouche et le moyen de rappel élastique facilite le dégagement de la cartouche en cas de remplacement.

La cartouche de filtre comporte un milieu de filtration qui s'étend à travers un passage entre l'ouverture d'entrée et l'ouverture de sortie, quand il est logé dans le boîtier. La cartouche de filtre comporte une manchette rigide poreuse ayant une première et une seconde extrémité, la première extrémité étant une extrémité fermée. Un milieu de filtration souple est fixé à la manchette. Un premier joint à la première extrémité de la manchette est situé entre la première extrémité et le milieu de filtration. Un second joint à la seconde extrémité de la manchette est disposé entre la seconde extrémité et le milieu de filtration. Un moyen de rappel est disposé entre la cartouche de filtration et l'adaptateur de filtre.

La fixation du couvercle de l'enveloppe de filtre sur le boîtier de l'enveloppe de filtre produit simultanément une compression des moyens de rappel par la cartouche de filtre dans l'adaptateur de filtre, la formation d'un joint étanche entre la cartouche de filtre et la sortie de l'adaptateur de filtre et la formation d'un joint étanche entre l'adaptateur de filtre et le joint interne du boîtier de l'enceinte de filtre.

La cartouche de filtre comporte :
- une manchette rigide poreuse ayant une première et une seconde extrémités, la première extrémité étant une extrémité fermée ;
- un milieu de filtration souple fixé à la manchette ;
- un premier joint d'étanchéité à la première extrémité de la manchette entre la première extrémité et le milieu de filtration ; et
- un second joint d'étanchéité à la seconde extrémité de la manchette entre la seconde extrémité et le milieu de filtration, la manchette et le milieu de filtration ayant une configuration et étant dimensionnés de manière qu'ils puissent être encastrés et logés sensiblement entièrement à l'intérieur de l'adaptateur de filtre et de façon à mettre en contact de manière étanche l'adaptateur de filtre avec le second joint et que le milieu de filtration s'étende à travers un passage allant des entrées vers les sorties du boîtier.

De préférence, la manchette est en polypropylène et le milieu de filtration souple est en un matériau choisi dans le groupe comportant la polysulfone et le polypropylène. De préférence, le milieu de filtration est réalisé de manière à filtrer des particules dont la taille est comprise entre 0,2 et 100 micromètres (µm).

Le moyen de rappel élastique est logé entre la cartouche de filtre et l'adaptateur de filtre ; par la fixation du couvercle supérieur de l'enveloppe de filtre sur le boîtier de l'enveloppe de filtre, on produit simultanément la compression du moyen de rappel élastique dans l'adaptateur de filtre par la cartouche de filtre, la formation d'un joint étanche entre la cartouche de filtre et la sortie de l'adaptateur de filtre et la formation d'un joint étanche entre l'adaptateur de filtre et le joint interne du boîtier de l'enveloppe de filtre, de telle sorte que l'adaptateur de filtre puisse être installé dans l'enveloppe de filtre pour une longue période de temps et que de manière répétée pendant la longue période de temps, la cartouche de filtre puisse être installée à l'intérieur de l'adaptateur de filtre pour réaliser l'étanchéité entre la cartouche et l'adaptateur de filtre et entre l'adaptateur de filtre et l'enveloppe de filtre, que le flux aqueux puisse être dirigé à travers le milieu de filtration et que la cartouche puisse être séparée facilement de l'adaptateur de filtre, enlevée et mise au rebut.

Ces caractéristiques et d'autres aspects de la présente invention seront rendus apparents pour l'homme de l'art à la lecture de la description suivante d'un exemple de réalisation préférentiel en référence aux dessins.

La figure 1 est une vue en perspective éclatée d'un système de filtre construit suivant la présente invention.

La figure 2 est une vue en coupe de la cartouche de filtre représentée sur la figure 1.

La figure 3 est une vue en coupe de l'adaptateur de filtre représenté à la figure 1, et

La figure 4 est une vue en coupe de la cartouche de filtre et de l'adaptateur de filtre suivant la présente invention installés dans une enceinte de filtre habituelle.

Dans la description suivante, des références identiques désignent des parties identiques ou correspondantes sur les différentes vues.

Egalement, dans la description qui va suivre, on doit comprendre que les termes tels que "devant", "derrière", "à gauche", "à droite", "vers le haut" et "vers le bas" et équivalents sont des mots utilisés pour la commodité de la description et ne doivent pas être compris comme des termes limitatifs.

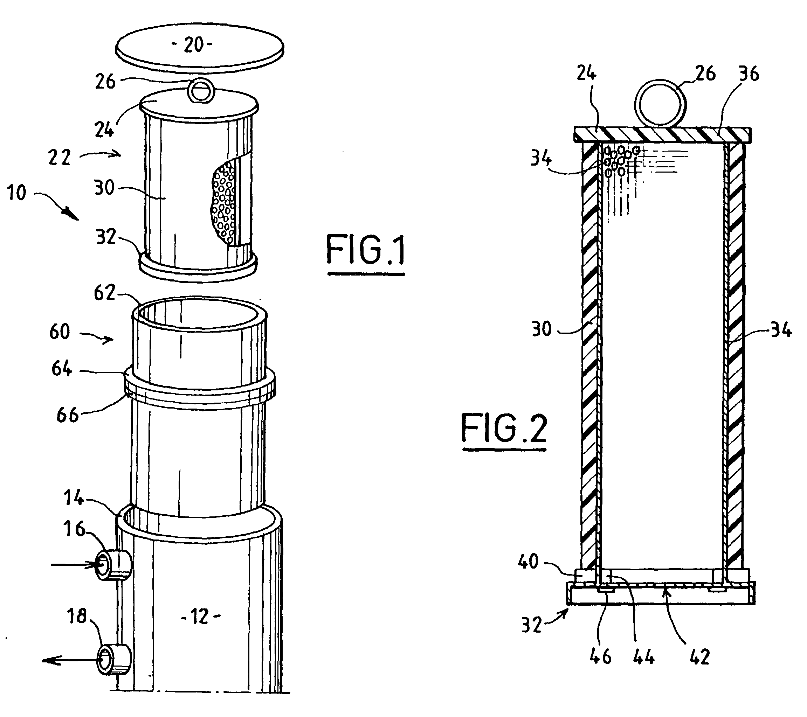

En se référant maintenant aux dessins en général et à la figure 1 en particulier, on comprendra que les illustrations sont données dans le but de décrire un mode de réalisation préférentiel de l'invention et ne sont pas destinées à limiter strictement l'invention.

Comme mieux représenté sur la figure 1, un système de filtre désigné de manière générale par le repère 10 est montré sous une forme de construction suivant l'invention. Le système de filtre comporte une enceinte de filtre conventionnelle 12 telle qu'une enceinte de filtre Cuno. L'enceinte de filtre 12 comporte une paroi externe tubulaire 14 de forme cylindrique, une entrée 16 à une extrémité de la forme cylindrique, une sortie 18 à l'autre extrémité et un couvercle 20 de fermeture étanche de l'enceinte. La paroi ou boîtier de l'enceinte de filtre est réalisée, de préférence, en acier inoxydable.

Une cartouche de filtre jetable, construite suivant la présente invention, est désignée de manière générale par le repère 22. La cartouche 22 comporte un fond supérieur de cartouche 24, un anneau de levage 26 solidaire du fond supérieur, un milieu de filtration 30 de forme générale tubulaire allongée et un fond inférieur de cartouche 32. Des détails supplémentaires de la cartouche seront montrés sur les figures 2 et 4.

Un adaptateur de filtre construit suivant l'invention est désigné de manière générale par le repère 60.

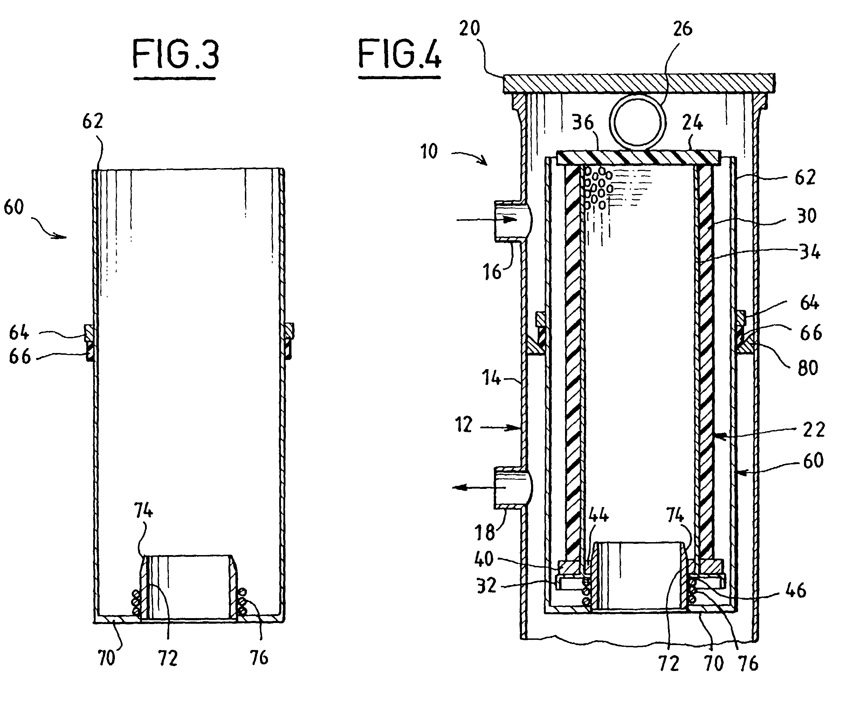

L'adaptateur 60 comporte une paroi externe tubulaire 62, un anneau de support 64 fixé sur la partie périphérique externe de la paroi tubulaire 62 et un joint remplaçable 66. Des détails supplémentaires de l'adaptateur de filtre 60 seront montrés sur les figures 3 et 4.

Comme mieux représenté sur la figure 2, on voit une coupe de la cartouche de filtre jetable 22. La cartouche de filtre 22 comporte un fond supérieur de cartouche 24 sur lequel est fixé un anneau de levage 26 et une plaque inférieure 32. Un support interne tubulaire perforé 34 s'étend entre le fond supérieur 24 et le fond inférieur 32 sur lesquels il est fixé. Un matériau polymère tel qu'un caoutchouc silicone forme un joint entre le milieu de filtration 30 et le fond supérieur de fermeture de la cartouche 24. De manière similaire, un matériau polymère forme également un joint entre l'autre extrémité du support tubulaire interne 34 et le fond inférieur 32 de la cartouche. Le fond inférieur 32 de la cartouche présente une configuration annulaire qui forme une sortie 42. Un joint de sortie 44 peut être formé par une partie du joint inférieur 40. Dans le mode de réalisation préférentiel, un anneau de reprise de charge 46 est fixé à la plaque inférieure du fond inférieur de cartouche 32 à l'opposé du joint de sortie 44 pour assurer la résistance et le support de la structure.

Le support interne 34 est réalisé sous la forme d'une manchette cylindrique rigide poreuse, de préférence en un matériau tel que le polypropylène et le milieu de filtration 30 est réalisé sous forme souple et de préférence en un matériau tel qu'une polysulfone ou le polypropylène. Le milieu de filtration permet de filtrer des particules dont la taille est comprise entre 0,2 et 100 micromètres.

Le milieu de filtration est disposé de préférence de manière annulaire autour de la manchette.

En se reportant maintenant à la figure 3, on voit une coupe d'un adaptateur de filtre 60. L'adaptateur 60 comporte une paroi tubulaire externe 62 sur laquelle est fixé un anneau de support 64. L'adaptateur de filtre 60 comporte une plaque de base annulaire 70 ayant une tuyère inversée 72. La tuyère inversée 72 est formée pour présenter un nez effilé 74 dont la fonction sera mieux comprise plus tard.

Dans le mode de réalisation préférentiel, un moyen de rappel tel qu'un ressort hélicoïdal 76 est fixé à l'une de ses extrémités à la plaque inférieure annulaire 70. Cependant, comme il sera mieux compris par la suite, le ressort 76 pourrait également être fixé à la plaque inférieure de la cartouche de filtre 22 ou pourrait n'être fixé ni à la cartouche 22 ni à l'adaptateur 60.

En se référant maintenant à la figure 4, on voit, en coupe, une cartouche de filtre 22 et un adaptateur 60 dans une position installée et une enceinte de filtre 12. A la différence de l'art antérieur dans lequel la cartouche doit être fixée de manière étanche sur l'extrémité de l'adaptateur et dans lequel l'adaptateur devient une pièce consommable des fournitures qui doit être remplacée chaque fois que le filtre est remplacé, la présente invention permet de transmettre indirectement la force nécessaire pour former de manière convenable un joint étanche entre l'anneau de support 64 et l'épaulement 80 du support de filtre de l'enceinte de filtration, par l'intermédiaire du fond supérieur 20 de l'enceinte, du support intérieur perforé 34 et du fond inférieur 32 de la cartouche par l'intermédiaire du moyen de rappel 76, de la plaque de fond annulaire 70 et de la paroi extérieure tubulaire 62 à l'anneau de support 64. Du fait qu'il n'y a pas de jonction étanche permanente en partie inférieure entre la cartouche de filtre 22 et l'adaptateur de filtre 60, la cartouche de filtre 22 peut être facilement enlevée et mise au rebut sans qu'il soit nécessaire de jeter également ou de manipuler l'adaptateur de filtre 60. Comme on peut s'en rendre compte également, dans le mode de réalisation préférentiel, l'anneau de levage 26 sert à la fois pour assurer une extraction facile de la cartouche 22 et pour transmettre une force du fond supérieur 20 de l'enceinte, au fond supérieur 24 de la cartouche.

En service, le joint remplaçable 66 est placé sur l'adaptateur 60 dans une position adjacente au côté inférieur de l'anneau de support 64. L'adaptateur de filtre 60 est alors placé à l'intérieur de l'enceinte de filtre 12 d'une manière habituelle. La cartouche de filtre 22 est alors placée à l'intérieur de l'adaptateur de filtre 60 et le fond supérieur de l'enceinte de filtre 20 est replacé et fixé sur l'enceinte de filtre. La fixation du fond supérieur 20 de l'enceinte de filtre sur l'enceinte de filtre 12 produit une compression du ressort 76 dans l'adaptateur de filtre 60, par la cartouche de filtre 22 cependant, qu'en même temps, se forme un joint étanche entre le joint de sortie 44 et la tuyère inversée 72. En même temps, des forces transmises par l'intermédiaire des parois 62 de l'adaptateur et de l'anneau de support 64 forment un joint étanche entre l'épaulement 80 du support de filtre et l'anneau de support 64 et le joint 66.

Après que la cartouche de filtre ait atteint sa durée de vie utile, le fond supérieur 20 de l'enceinte de filtration est enlevé et la cartouche de filtration 22 qui est séparée de l'adaptateur sous l'effet du ressort 76 est enlevée par l'intermédiaire de l'anneau de support 26 et éliminée de manière habituelle. En même temps ou en cas de besoin, le joint remplaçable 66 peut être remplacé sur l'adaptateur de filtre 60. La cartouche usée peut être éliminée et jetée en réalisant un compactage ou un déchiquetage ou encore un déchiquetage suivi d'un compactage de la cartouche usée. Une nouvelle cartouche de filtration 22 est alors insérée à l'intérieur de l'adaptateur de filtre 60 et le fond supérieur 20 de l'enceinte de filtre est à nouveau fixé de manière étanche. Dans la présente invention, les parois du filtre et de l'adaptateur de filtre sont constituées de préférence par de l'acier inoxydable et du caoutchouc silicone est utilisé pour les matériaux de joint. Cependant, d'autres matériaux pourraient être utilisés pour des applications particulières comprenant le verre et les plastiques pour les applications à basse température.

La présente invention est également utile comme méthode pour mettre au rebut un filtre contenant une matière dangereuse sous forme de particules. Après sa durée de vie utile, la cartouche peut être enlevée et éliminée. Par exemple, la cartouche une fois qu'elle est enlevée de l'adaptateur peut être compactée ou déchiquetée. De manière alternative, la cartouche peut être déchiquetée puis la cartouche déchiquetée peut être compactée.

Certaines modifications ou améliorations pourront apparaître à l'homme de l'art à la lecture de la description qui précède. Par exemple, dans un mode de réalisation similaire, la structure de support en acier inoxydable se trouve du côté extérieur de la cartouche de filtre remplaçable pour adapter l'ensemble à une utilisation dans des enceintes de filtre dont le branchement est réalisé de manière que l'écoulement de liquide passe de l'intérieur vers l'extérieur du filtre.

L'ensemble de filtration, la cartouche de filtre et le procédé d'élimination d'une cartouche de filtre usée qui ont été décrits peuvent être utilisés, en particulier, dans le cadre de la séparation de particules dangereuses, radioactives du fluide de refroidissement d'un réacteur nucléaire qui est amené à traverser la cartouche du filtre.

## Revendications

1. Dispositif de filtration pour enlever une matière en particules d'un écoulement aqueux dans une enceinte de filtre (12) comprenant :
- un boîtier de support (14) ayant un fond supérieur démontable (20), une entrée (16) pour l'écoulement aqueux, une sortie (18) pour l'écoulement aqueux et un joint interne (80) entre l'entrée et la sortie ;
- un adaptateur de filtre (60) encastrable dans le boîtier (14) et dont la dimension est telle qu'il puisse être pratiquement entièrement logé à l'intérieur dudit boîtier (14) et qu'il soit en contact de manière étanche avec ledit joint interne (80) dudit boîtier (14), ledit adaptateur de filtre (60) ayant un fond inférieur (70) définissant une sortie de l'adaptateur ; et
- une cartouche de filtre (22) encastrable dans l'adaptateur de filtre (60) ayant des dimensions telles qu'elle soit pratiquement entièrement reçue à l'intérieur de l'adaptateur de filtre (60) et pour pouvoir simultanément entrer en contact avec le fond supérieur (20) de l'enceinte de filtre (12) et entrer en contact étanche avec la sortie de l'adaptateur de filtre (60) et ayant un milieu filtrant (30) qui s'étend à travers un passage allant de l'entrée vers la sortie de l'enceinte de filtre (12) quand il est logé dans le boîtier (14), de telle sorte que l'adaptateur de filtre (60) puisse être installé dans ladite enceinte de filtre pour une longue période de temps et que de manière répétée pendant la longue période de temps, la cartouche de filtre (22) puisse être installée à l'intérieur dudit adaptateur de filtre (60) pour réaliser une jonction étanche entre la cartouche (22) et l'adaptateur de filtre (60) et entre l'adaptateur de filtre (60) et l'enceinte de filtre (12), que le flux aqueux puisse être dirigé à travers le milieu de filtration et que la cartouche (22) puisse être enlevée et éliminée, **caractérisé en ce que** le fond inférieur (70) de l'adaptateur (60) comporte une tuyère inversée (72) en saillie vers l'intérieur de l'adaptateur (60) constituant la sortie de l'adaptateur (60), que la cartouche de filtre (22) comporte un joint de sortie (44) annulaire destiné à être engagé sur la tuyère inversée (72) de l'adaptateur (60) de manière étanche et qu'un moyen de rappel (76) élastique est intercalé entre la cartouche de filtre (22) et l'adaptateur de filtre (60) de manière à exercer une force de rappel sur la cartouche en direction du fond supérieur (20) de l'enceinte de filtre (12) et une force de rappel sur l'adaptateur de filtre (60) en direction du joint d'étanchéité interne (80), lorsque le fond supérieur (20) de l'enceinte de filtre est fixé sur le boîtier (14).

2. Dispositif suivant la revendication 1, **caractérisé en ce que** ledit moyen de rappel (76) est un ressort hélicoïdal.

3. Dispositif suivant l'une quelconque des revendications 1 et 2, **caractérisé en ce que** ladite tuyère inversée (74) dimensionnée pour s'engager de manière étanche sur une extrémité de la cartouche de filtre (22) comporte un nez effilé situé à l'extrémité de la tuyère (74) opposée à l'extrémité de la tuyère inversée fixée sur ledit fond inférieur (70).

4. Dispositif suivant l'une quelconque des revendications 1 à 3, **caractérisé en ce que** l'adaptateur de filtre (60) comporte un anneau de support (64) s'étendant suivant sa périphérie et adapté pour entrer en contact étanche avec le joint interne (80, 66) du boîtier de l'enceinte de filtre (12).

5. Dispositif suivant la revendication 4, comportant de plus un joint (66) disposé entre ledit anneau de support (64)et ledit joint interne (80) dudit boîtier d'enceinte de filtre (12).

6. Dispositif de filtration suivant l'une quelconque des revendications 1 à 5, **caractérisé en ce que** la cartouche du filtre (22) comporte une manchette rigide poreuse (34) ayant une première extrémité fermée et une seconde extrémité en contact étanche avec la sortie de l'adaptateur de filtre (60) et un milieu de filtration souple fixé sur la manchette (34), et qu'un anneau de levage (26) est solidaire de la première extrémité fermée de la manchette (34).

7. Dispositif suivant la revendication 6, **caractérisé en ce que** ladite manchette est en polypropylène et ledit milieu de filtration (30) souple est choisi dans le groupe comportant la polysulfone et le polypropylène.

8. Dispositif suivant la revendication 7, **caractérisé en ce que** ledit milieu de filtration (30) filtre des particules entre 0,2 et 100 micromètres.

9. Dispositif suivant la revendication 8, **caractérisé en ce que** ladite manchette (34) est cylindrique.

10. Dispositif suivant la revendication 9, **caractérisé en ce que** ledit milieu de filtration (30) est disposé de manière annulaire à l'extérieur de ladite manchette (34).

11. Procédé d'élimination d'un filtre d'un dispositif selon l'une quelconque des revendications 1 à 10, contenant une matière en particules dans une enceinte de filtre (12) ayant un fond supérieur amovible (20), ledit procédé comprenant les étapes consistant à :
- installer l'adaptateur de filtre (60) dans ladite enceinte de filtre (12) pour recevoir un écoulement aqueux sur une longue période de temps ;
- de manière périodique, pendant la longue période de temps, installer une cartouche de filtre (12) jetable dans l'adaptateur de filtre (60) et fixer ledit fond supérieur (20) de ladite enceinte de filtre (12) de manière à comprimer un ressort hélicoïdal (76) intercalé entre la cartouche de filtre (22) et l'adaptateur de filtre (60) pour relier de manière étanche ladite cartouche (22) audit adaptateur de filtre (60) et ledit adaptateur de filtre (60) à ladite enceinte de filtre (12) ;
- diriger un écoulement aqueux à travers la cartouche de filtre (22);
- enlever la cartouche (22) quand la cartouche de filtre est usée en démontant le fond supérieur (20); et
- éliminer la cartouche (22).

12. Procédé suivant la revendication 11, **caractérisé en ce que** l'étape d'élimination comporte le compactage de la cartouche (22).

13. Procédé suivant la revendication 11, **caractérisé en ce que** l'étape d'élimination comporte le déchiquetage de la cartouche (22).

14. Procédé suivant la revendication 11, **caractérisé en ce que** l'étape d'élimination comporte le déchiquetage de la cartouche (22) suivi par le compactage de la cartouche (22) déchiquetée.

15. Procédé suivant l'une quelconque des revendications 11 à 14, **caractérisé en ce que** l'étape dans laquelle on dirige un écoulement aqueux consiste à diriger de l'eau de refroidissement d'un réacteur nucléaire à travers la cartouche de filtre (22).

## Patentansprüche

1. Filtervorrichtung zum Entfernen eines teilchenförmigen Stoffs aus einer wässrigen Strömung in einem Filterraum (12), die aufweist:
- ein Trägergehäuse (14) mit einem oberen, abnehmbaren Boden (20), einem Einlaß (16) für die wässrige Strömung, einem Auslaß (18) für die wässrige Strömung und einer inneren Dichtung (80) zwischen dem Einlaß und dem Auslaß,
- ein in das Gehäuse (14) einsetzbares Filter-Paßstück (60), das so bemessen ist, daß es praktisch vollständig in das Gehäuse (14) eingesetzt werden kann und daß es dicht mit der inneren Dichtung (80) des Gehäuses. (14) in Verbindung steht, wobei das Filter-Paßstück (60) einen unteren Boden (70) aufweist, der einen Ausgang des Paßstücks definiert, und
- eine in das Filter-Paßstück (60) einsetzbare Filterkartusche (22), die solche Abmessungen hat, daß sie praktisch vollständig im Filter-Paßstück (60) aufgenommen wird und gleichzeitig mit dem oberen Boden (20) des Filterraums (12) in Kontakt gelangen und mit dem Ausgang des Filter-Paßstücks (60) in dichten Kontakt treten kann und ein filterndes Medium (30) aufweist, das sich über einen Durchgang erstreckt, der vom Einlaß bis zum Auslaß des Filterraums (12) verläuft, wenn es im Gehäuse (14) angeordnet ist, so daß das Filter-Paßstück (60) in den Filterraum für einen langen Zeitraum eingesetzt werden kann, und daß während des langen Zeitraums die Filterkartusche (22) wiederholt ins Innere des Filter-Paßstücks (60) eingesetzt werden kann, um eine dichte Verbindung zwischen der Kartusche (22) und dem Filter-Paßstück (60) und zwischen dem Filter-Paßstück (60) und dem Filterraum (12) herzustellen, daß die wässrige Strömung durch das Filtermedium hindurch geleitet werden kann und daß die Kartusche (22) herausgenommen und beseitigt werden kann,
**dadurch gekennzeichnet, daß** der untere Boden (70) des Paßstücks (60) eine umgekehrte Düse (72) aufweist, die ins Innere des Paßstücks (60) vorsteht und den Auslaß des Paßstücks (60) bildet, daß die Filterkartusche (22) eine ringförmige Auslaßdichtung (44) aufweist, die auf die umgekehrte Düse (72) des Paßstücks (60) dicht aufgesetzt wird, und daß ein elastisches Rückholmittel (76) zwischen die Filterkartusche (22) und das Filter-Paßstück (60) so zwischengefügt ist, daß es eine Rückholkraft auf die Kartusche in Richtung des oberen Bodens (20) des Filterraums (12) und eine Rückholkraft auf das Filter-Paßstück (60) in Richtung der inneren Dichtung (80) ausübt, wenn der obere Boden (20) des Filterraums auf dem Gehäuse (14) befestigt ist.

2. Vorrichtung nach Anspruch 1, **dadurch gekennzeichnet, daß** das Rückholmittel (76) eine zylindrische Schraubenfeder ist.

3. Vorrichtung nach einem der Ansprüche 1 und 2, **dadurch gekennzeichnet, daß** die umgekehrte Düse (74), die so bemessen ist, daß sie sich dicht auf ein Ende der Filterkartusche (22) aufsetzt, eine sich verjüngende Nase aufweist, die sich an dem Ende der Düse (74) befindet, das dem Ende der umgekehrten Düse gegenüberliegt, das am unteren Boden (70) befestigt ist.

4. Vorrichtung nach einem der Ansprüche 1 bis 3, **dadurch gekennzeichnet, daß** das Filter-Paßstück (60) einen Stützring (64) aufweist, der sich um seinen Umfang erstreckt und geeignet ist, um mit der inneren Dichtung (80, 66) des Gehäuses des Filterraums (12) in dichten Kontakt zu treten.

5. Vorrichtung nach Anspruch 4, die außerdem eine Dichtung (66) aufweist, die zwischen dem Stützring (64) und der inneren Dichtung (80) des Gehäuses des Filterraums (12) angeordnet ist.

6. Vorrichtung nach einem der Ansprüche 1 bis 5, **dadurch gekennzeichnet, daß** die Filterkartusche (22) eine steife, poröse Manschette (34), deren erstes Ende geschlossen ist und deren zweites Ende in dichtem Kontakt mit dem Ausgang des Filter-Paßstücks (60) steht, und ein biegsames Filtermedium aufweist, das auf der Manschette (34) befestigt ist, und daß ein Anhebring (26) fest mit dem ersten, geschlossenen Ende der Manschette (34) verbunden ist.

7. Vorrichtung nach Anspruch 6, **dadurch gekennzeichnet, daß** die. Manschette aus Polypropylen ist, und das biegsame Filtermedium (30) aus der Gruppe ausgewählt wird, die Polysulfon und Polypropylen enthält.

8. Vorrichtung nach Anspruch 7, **dadurch gekennzeichnet, daß** das Filtermedium (30) Teilchen zwischen 0,2 und 100 Mikrometer filtert.

9. Vorrichtung nach Anspruch 8, **dadurch gekennzeichnet, daß** die Manschette (34) zylindrisch ist.

10. Vorrichtung nach Anspruch 9, **dadurch gekennzeichnet, daß** das Filteimedium (30) ringförmig außerhalb der Manschette (34) angeordnet ist.

11. Verfahren zum Beseitigen eines Filters einer Vorrichtung nach einem der Ansprüche 1 bis 10, der einen teilchenförmigen Stoff in einem Filterraum (12) enthält, der einen lösbaren oberen Boden (20) aufweist, wobei das Verfahren die Schritte aufweist, die darin bestehen:
- das Filter-Paßstück (60) in den Filterraum (12) einzusetzen, um über einen langen Zeitraum eine wässrige Strömung aufzunehmen;
- periodisch während des langen Zeitraums eine wegwerfbare Filterkartusche (22) in das Filter-Paßstück (60) einzusetzen und den oberen Boden (20) des Filterraums (12) so zu befestigen, daß eine zylindrische Schraubenfeder (76), die zwischen die Filterkartusche (22) und das Filter-Paßstück (60) eingeschoben ist, zusammengedrückt wird, damit die Kartusche (22) dicht mit dem Filter-Paßstück (60) und das Filter-Paßstück (60) mit dem Filterraum (12) verbunden wird;
- eine wässrige Strömung durch die Filterkartusche (22) zu leiten;
- die Kartusche (22) zu entfernen, wenn die Filterkartusche verbraucht ist, indem der obere Boden (20) abgenommen wird; und
- die Kartusche (22) zu beseitigen.

12. Verfahren nach Anspruch 11, **dadurch gekennzeichnet, daß** der Schritt des Beseitigens das Zusammenpressen der Kartusche (22) beinhaltet.

13. Verfahren nach Anspruch 11, **dadurch gekennzeichnet, daß** der Schritt des Beseitigens das Zerreißen der Kartusche (22) beinhaltet.

14. Verfahren nach Anspruch 11, **dadurch gekennzeichnet, daß** der Schritt des Beseitigens das Zerreißen der Kartusche (22) gefolgt vom Zusammenpressen der zerrissenen Kartusche (22) beinhaltet.

15. Verfahren nach einem der Ansprüche 11 bis 14, **dadurch gekennzeichnet, daß** der Schritt, in dem eine wässrige Strömung geleitet wird, darin besteht, Kühlwasser eines Kernreaktors durch die Filterkartusche (22) zu leiten.

## Claims

1. Filtration apparatus for removing a particulate material from an aqueous flow in a filter enclosure (12) comprising:
- a support housing (14) having a removable upper base (20), an inlet (16) for the aqueous flow, an outlet (18) for the aqueous flow and an internal joint (80) between the inlet and outlet;
- a filter adapter (60) which may be fitted into the housing (14) and the dimensions of which are such that it can be virtually entirely accommodated inside said housing (14) and is in leaktight contact with said internal joint (80) of said housing (14), said filter adapter (60) having a lower base (70) defining an outlet of the adapter; and
- a filter cartridge (22) which can be fitted into the filter adapter (60) being of a size such that it can be virtually entirely accommodated inside the filter adapter (60) and in order to be simultaneously in contact with the upper base (20) of the filter enclosure (12) and in leaktight contact with the outlet of the filter adapter (60) and having a filtering medium (30) which extends through a passage running from the inlet to the outlet of the filter enclosure (12) when it is accommodated in the housing (14), so that the filter adapter (60) can be installed in said filter enclosure for a long period of time and so that the filter cartridge (22) can be installed inside said filter adapter (60) repeatedly during the long period of time to produce a leaktight junction between the cartridge (22) and the filter adapter (60) and between the filter adapter (60) and the filter enclosure (12), the aqueous flow can be directed through the filtration medium and the cartridge (22) can be removed and disposed of, **characterised in that** the lower base (70) of the adapter (60) comprises an inverted pipe (72) projecting into the adapter (60) constituting the outlet of the adapter (60), the filter cartridge (22) comprises an annular outlet joint (44) adapted to engage on the inverted pipe (72) of the adapter (60) in leaktight manner and resilient recoil means (76) are intercalated between the filter cartridge (22) and the filter adapter (60) so as to exert a recoil force on the cartridge in the direction of the upper base (20) of the filter enclosure (12) and a recoil force on the filter adapter (60) in the direction of the internal sealing joint (80) when the upper base (20) of the filter enclosure is fixed to the housing (14).

2. Apparatus according to claim 1, **characterised in that** said recoil means (76) comprise a helical spring.

3. Apparatus according to one of claims 1 and 2, **characterised in that** said inverted pipe (74) which is dimensioned so as to engage in leaktight manner on one end of the filter cartridge (22) comprises a tapering nose located at the opposite end of the inverted pipe (74) from the end which is fixed to said lower base (70).

4. Apparatus according to any one of claims 1 to 3, **characterised in that** the filter adapter (60) comprises a support ring (64) extending around its periphery and adapted to make leaktight contact with the internal joint (80, 66) of the housing of the filter enclosure (12).

5. Apparatus according to claim 4, further comprising a joint (66) disposed between said support ring (64) and said internal joint (BO) of said housing of the filter enclosure (12).

6. Filtration apparatus according to any one of claims 1 to 5, **characterised in that** the filter cartridge (22) comprises a porous rigid sleeve (34) having a closed first end and a second end in leaktight contact with the outlet of the filter adapter (60) and a flexible filtration medium fixed to the sleeve (34), and in that a lifting ring (26) is integral with the closed first end of the sleeve (34).

7. Apparatus according to claim 6, **characterised in that** said sleeve is made of polypropylene and said flexible filtration medium (30) is selected from the group comprising polysulphone and polypropylene.

8. Apparatus according to claim 7, **characterised in that** said filtration medium (30) filters particles between 0.2 and 100 micrometres.

9. Apparatus according to claim 8, **characterised in that** said sleeve (34) is cylindrical.

10. Apparatus according to claim 9, **characterised in that** said filtration medium (30) is disposed in an annular arrangement outside said sleeve (34).

11. Process for disposing of a filter from an apparatus according to any one of claims 1 to 10, containing a particulate material in a filter enclosure (12) having a removable upper base (20), said process comprising steps consisting of:
- installing the filter adapter (60) in said filter enclosure (12) so as to receive an aqueous flow over a long period of time;
- periodically, during the long period of time, installing a disposable filter cartridge (22) in the filter adapter (60) and fixing said upper base (20) of said filter enclosure (12) so as to compress a helical spring (76) intercalated between the filter cartridge (22) and the filter adapter (60) in order to connect said cartridge (22) to said filter adapter (60) and said filter adapter (60) to said filter enclosure (12) in a leaktight manner;
- directing an aqueous flow through the filter cartridge (22);
- removing the cartridge (22) when the filter cartridge is worn out by dismantling the upper base (20); and
- disposing of the cartridge (22).

12. Process according to claim 11, **characterised in that** the disposal step comprises compacting the cartridge (22).

13. Process according to claim 11, **characterised in that** the disposal step comprises shredding the cartridge (22).

14. Process according to claim 11, **characterised in that** the disposal step comprises shredding the cartridge (22) followed by compacting of the shredded cartridge (22).

15. Process according to any one of claims 11 to 14, **characterised in that** the step in which an aqueous flow is directed consists in directing the coolant water from a nuclear reactor through the filter cartridge (22).
